## Europäisches Patentamt

## European Patent Office

## Office européen des brevets

(19)

(11) Veröffentlichungsnummer: **0 143 226**
A2

(12) # EUROPÄISCHE PATENTANMELDUNG

(21) Anmeldenummer: **84110825.1**

(51) Int. Cl.⁴: **H 04 L 25/40**

(22) Anmeldetag: **11.09.84**

(30) Priorität: **29.09.83 DE 3335418**

(43) Veröffentlichungstag der Anmeldung: **05.06.85**
**Patentblatt 85/23**

(84) Benannte Vertragsstaaten: **AT CH DE FR GB IT LI NL SE**

(71) Anmelder: **Siemens Aktiengesellschaft, Berlin und München Wittelsbacherplatz 2, D-8000 München 2 (DE)**

(72) Erfinder: **Wahr, Alfons-Josef, Dipl.-Ing., Pucher Strasse 52, D-8080 Fürstenfeldbruck (DE)**
Erfinder: **Breintner, Richard, Dipl.-Ing., Isenstrasse 23, D-8261 Ampfing (DE)**
Erfinder: **Thinschmidt, Hans, Dipl.-Ing., Kreuzlingerstrasse 52c, D-8034 Germering (DE)**
Erfinder: **Stock, Peter, Dipl.-Ing., Neubiberger Strasse 65, D-8000 München 83 (DE)**

(54) **Empfangseinrichtung für eine bitserielle, asynchrone Übertragungsstrecke für hohe Datenraten.**

(57) In einer Empfangseinrichtung für eine bitserielle, asynchrone Übertragungsstrecke ist eine Laufzeitkette (1) vorgesehen, der zusätzlich zu einer Steuerung (9) ein Empfangssignal zugeführt wird. Die Laufzeitkette (1) dient zur Feststellung des Grades der Phasenverschiebung des Startbits in einem empfangenen Datensignal zu einem lokalen Takt. Ein Prioritätsencoder (4), der aus der dem Datensignal entsprechenden gespeicherten Information ein Signal ableitet, liefert dieses Signal an einen Multiplexer (5), der die Datenbits der jeweils gemessenen Phasenverschiebung phasenrichtig abruft.

0143226

SIEMENS AKTIENGESELLSCHAFT        Unser Zeichen

Berlin und München        | VPA  83 P 1 7 5 8  E

**Empfangseinrichtung für eine bitserielle, asynchrone
Übertragungsstrecke für hohe Datenraten.**

Die vorliegende Erfindung betrifft eine Empfangseinrichtung für eine bitserielle, asynchrone Übertragungsstrecke
für hohe Datenraten zum Zwecke einer Datenübertragung zwischen einer Datenquelle und einer Datensenke, vorzugsweise
jeweils einem Rechner, mit einer Sendeeinrichtung und der
Empfangseinrichtung, wobei in der Sendeeinrichtung eine
Parallel/Seriell-Umsetzung und in der Empfangseinrichtung
eine Seriell/Parallel-Umsetzung erfolgt.

Übertragungsstrecken mit Datenraten über 1-2 Mbit/s werden bisher mit synchronen Prozeduren betrieben, da die bei
asynchronen Prozeduren notwendigen hohen Abtastfrequenzen
(16 x bzw. 64 x die Überragungsfrequenz) in herkömmlichen
Empfängerschaltungen für TTL-Bausteine eine technologische
Barriere darstellen.

Der vorliegenden Erfindung liegt die Aufgabe zugrunde, eine
Empfangseinrichtung für eine bitserielle, asynchrone Übertragungsstrecke für hohe Datenraten zum Zwecke einer Datenübertragung der eingangs genannten Art zu schaffen, die mit
Schottky-TTL-Schaltkreisen realisiert werden kann und für
Übertragungsraten bis zu etwa 60 Mbit/s einsetzbar ist.

Die der Erfindung zugrundeliegende Aufgabe wird durch eine
Empfangseinrichtung für eine bitserielle, asynchrone Übertragungsstrecke gemäß dem Oberbegriff des Patentanspruchs 1
gelöst, die durch die in dem kennzeichnenden Teil des
Patentanspruchs 1 angegebenen Merkmale charakterisiert ist.

Pap 1 Bla /28.9.1983

Vorteilhafte Weiterbildungen sind durch die in den Unteransprüchen angegebenen Merkmale gekennzeichnet.

Im folgenden wird die vorliegende Erfindung anhand mehrerer, ein bevorzugtes Ausführungsbeispiel für die Erfindung
betreffendee Figuren im einzelnen beschrieben.

Fig.1 zeigt eine prinzipielle Darstellung eines Ausführungsbeispiels für eine Empfangseinrichtung gemäß
       der vorliegenden Erfindung.

Fig.2 zeigt ein Impuls/Zeit-Diagramm für einen Betriebsfall, bei dem die positiven Taktflanken verwendet
       werden.

Fig.3 zeigt ein Impuls/Zeit-Diagramm für einen Betriebsfall, bei dem beide Taktflanken verwendet werden.

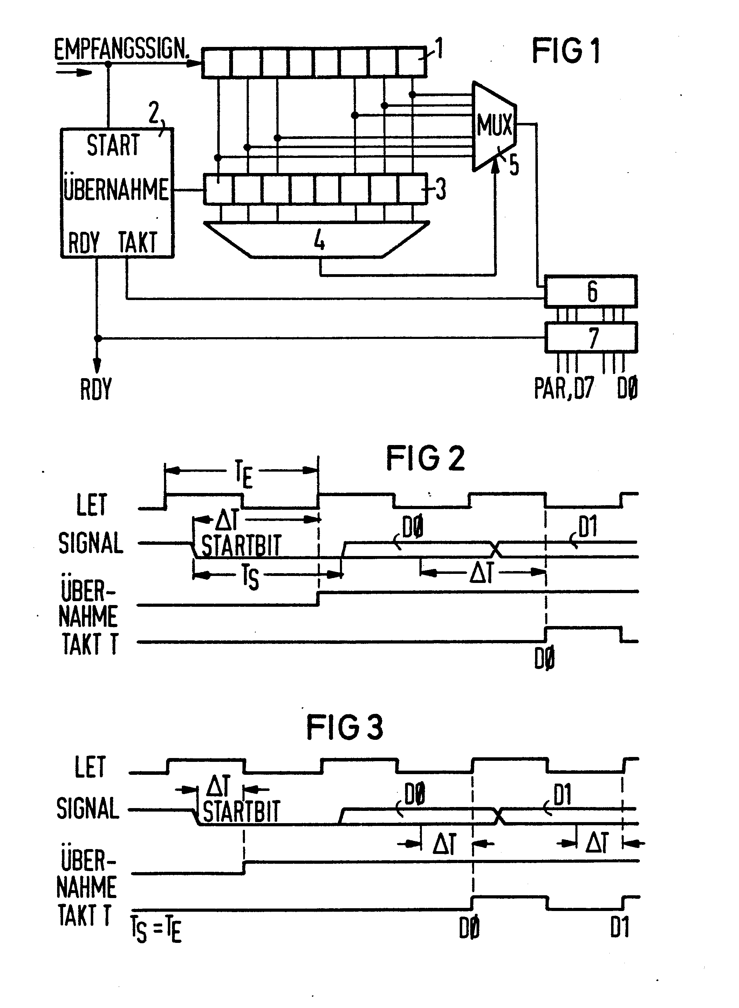

Fig.1 zeigt die Struktur eines Ausführungsbeispiels für
eine Schaltungsanordnung gemäß der vorliegenden Erfindung. Ein Empfangssignal läuft durch eine Laufzeitkette 1,
mit der die Phasenverschiebung des Startbits jeden Zeichens
im empfangenen Signal zu einem lokalen Empfangstakt LET
festgestellt wird. Diese Verschiebung wird digital gespeichert. In einem Prioritätscoder 4 wird aus dieser Information die Phasenverschiebung der Datenbits für das zugehörige
Zeichen abgeleitet und einem Multiplexer 5 zugeführt. Dieser wählt aus der Laufzeitkette 1 die Datenbits mit der gemessenen Phasenverschiebung aus. Nacheinander werden die
Bits eines Zeichens abgetastet, in einem Schieberegister 6
gesammelt und stehen nach Empfang des letzten Bits des Charakters zur weiteren Verarbeitung parallel in einem Pufferspeicher 7 an. Mit dem Startbit des folgenden Zeichens wird
das Empfangssignal erneut synchronisiert, und außerdem werden wieder alle notwendigen Steuersignale der Schaltung generiert.

Die Steuerung der genannten Schaltungselemente erfolgt mittels einer Steuerwichtung 9, der die Impulse des Empfangssignals zugeführt werden. Die genannte Speicherung erfolgt
in einem Speicher 3.

Die Schaltungselemente der erfindungsgemäßen Empfangseinrichtung sind zumindest zum Teil als Schottky-TTL-Schaltkreise, vor höhere Anforderungen an die Arbeitsgeschwindigkeit als Advanced-Schottky-TTL-Schaltkreise realisiert.

Die Laufzeitkette 1 kann vorteilhafterweise aufgrund der
erfindungsgemäßen Konzeption aus preisgünstigen, mit relativ großen Schaltzeittoleranzen behafteten Elementen aufgebaut sein.

Aus dem Impuls/Zeitdiagramm der gemäß Fig.2 ist zu ersehen, daß nach Eintreffen des Startbits im empfangenen Signal
die erste Flanke des Empfangstaktes die Phasenverschiebung
zum Startbit festlegt. Die daraus abgeleitete Information
wird dazu benutzt, um festzuhalten, an welcher Stelle in
der Laufzeitkette die Datenbits mit der Flanke des lokalen
Empfangstaktes abgetastet und in das Schieberegister eingetragen werden müssen.

Je nach Schaltungsimplementierung muß die Durchlaufzeit der
Laufzeitkette größer $T_E$ bzw. größer $T_E/2$ sein, und zwar unabhängig davon, ob nur eine oder jede Flanke des internen
Taktes zur Synchronisierung benutzt wird. Anstelle des Datensignals kann auch der Takt an die Laufzeitkette angelegt
werden, der Multiplexer liefert dann den Takt mit der benötigten Phasenverschiebung, um die Einganghsdaten direkt in

83 P O1 1745 2 26 6

das Schiebergister zu übernehmen.

7 Patentansprüche
3 Figuren

83 P 1758 E 0143226

Patentansprüche:

1. Empfangseinrichtung für eine bitserielle, asynchrone Übertragungsstrecke für hohe Datenraten zum Zwecke einer Datenübertragung zwischen einer Datenquelle und einer Datensenke, vorzugsweise jeweils einem Rechner, mit einer Sendeeinrichtung und der Empfangseinrichtung, wobei in der Sendeeinrichtung eine Parallel/Seriell-Umsetzung und in der Empfangseinrichtung eine Seriell/Parallel-Umsetzung der Datensignalzeichen erfolgt, dadurch g e k e n n z e i c h n e t , daß eine Laufzeitkette (1), für die relativ große Schaltzeittoleranzen zulässig sind, vorgesehen ist, durch die ein empfangenes Datensignal hindurchläuft, durch welche Laufzeitkette (1) die Phasenverschiebung des Startbits eines jeden Zeichens im empfangenen Signal zu einem lokalen Empfangstakt (LET) festgestellt wird,

daß die festgestellte Phasenverschiebung digital in einem Speicher (3) gespeichert wird,

daß ein Prioritätscoder (4) vorgesehen ist, in dem aus der gespeicherten Information ein Signal für die Phasenverschiebung der Datenbits für das zugehörige Zeichen abgeleitet wird, welches Signal einem Multiplexer (5) zugeführt wird, daß der Multiplexer (5) die Datenbits mit der jeweils gemessenen Phasenverschiebung aus der Laufzeitkette (1) abruft,

daß die derart abgerufenen Datenbits eines Zeichens nacheinander in einem Schieberegister (6) gesammelt und in einen Pufferspeicher übertragen werden, an dessen Signalausgängen die Datenbits eines Zeichens parallel abrufbar zur Verfügung gestellt werden, daß der Speicher (3), das Schieberegister (6) und der Pufferspeicher (7) von einer Steuerung (2) gesteuert oder getaktet werden, der die Impulse des Empfangssignals zugeführt werden, und

0143226

daß die Empfangseinrichtung und die zu der Übertragungsstrecke gehörende Sendeeinrichtung jeweils mit quarzstabilen
Takten versorgt werden, die gleiche Frequenz haben, jedoch
nicht notwendigerweise synchron ausgegeben werden müssen.

2. Empfangseinrichtung nach Anspruch 1, dadurch  g e-
k e n n z e i c h n e t , daß nach dem Eintreffen eines
Startbits in dem empfangenen Signal die erste auftretende
Flanke des Empfangstaktes die Phasenverschiebung in dem
Startbit festlegt wird und daß eine daraus abgeleitete
Information dazu benutzt wird, festzustellen, an welcher
stelle in der Laufzeitkette (1)  die Datenbits mit der
Flanke des lokalen Empfangstaktes (LET) abgetastet und in
das Schieberegistr (6) eingetragen werden müssen.

3. Empfangseinrichtung nach Anspruch 1, dadurch  g e-
k e n n z e i c h n e t , daß anstelle des Datensignals
der lokale Empfangstakt (LET) an die Laufzeitkette (1) gelegt wird, wodurch der Multiplexer (5) den Takt mit der
benötigten Phasenverschiebung liefert, um die Eingangsdatensignalimpulse in das Schieberegister (6) übernehmen
zu können.

4. Empfangseinrichtung nach Anspruch 1, dadurch  g e-
k e n n z e i c h n e t , daß die Durchlaufzeit der Laufzeitkette (1) größer als die Periode ($T_E$) des lokalen Empfangstaktes (LET) ist, wenn nur eine Flanke des internen
Taktes (T) ist, wenn nur eine Synchronisierung benutzt wird.

5. Empfangseinrichtung nach Anspruch 1, dadurch  g e-
k e n n z e i c h n e t , daß die Durchlaufzeit der Laufzeitkette (1) größer als die Hälfte der Periode ($T_E$) des
lokalen Empfangstaktes (LET) ist, wenn jeder Flanke des
internen Taktes (T) zur Synchronisierung benutzt wird.

6. Empfangseinrichtung nach einem der vorhergehenden Ansprüche, dadurch g e k e n n z e i c h n e t , daß die Schaltungselemente zumindest zum Teil in Schottky-TTL-Schalttechnik realisiert sind.

7. Empfangseinrichtung nach einem der Ansprüche 1 bis 5, dadurch g e k e n n z e i c h n e t , daß die Schaltungselemente zumindest zum Teil in Advanced-Schottky-Schaltkreistechnik realisiert sind.

FIG 1

FIG 2

FIG 3